Europäisches Patentamt

European Patent Office

Office européen des brevets

(19)

(11) **EP 1 005 754 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(51) Int Cl.⁷: **H04N 5/217**, H04N 3/15

(21) Anmeldenummer: **97948695.8**

(22) Anmeldetag: **30.10.1997**

(86) Internationale Anmeldenummer:
**PCT/DE97/02528**

(87) Internationale Veröffentlichungsnummer:
**WO 99/03262 (21.01.1999 Gazette 1999/03)**

(54) **VERFAHREN UND SCHALTUNGSANORDNUNG ZUR KOMPENSATION TEMPERATUR-, SPANNUNGS- SOWIE HERSTELLUNGSBEDINGTER SCHWANKUNGEN BEI CMOS-BILDSENSOREN**

METHOD AND CIRCUIT CONFIGURATION FOR COMPENSATING VARIATIONS IN THE CMOS IMAGE SENSORS RESULTING FROM TEMPERATURE, VOLTAGE AND PRODUCTION

PROCEDE ET CONFIGURATION DE CIRCUIT POUR COMPENSER LES FLUCTUATIONS DANS LES CAPTEURS D'IMAGES CMOS, DUES A LA TEMPERATURE, A LA TENSION ET A LA FABRICATION.

(84) Benannte Vertragsstaaten:
**DE FR GB IT**

(30) Priorität: **07.07.1997 DE 19729001**

(43) Veröffentlichungstag der Anmeldung:
**07.06.2000 Patentblatt 2000/23**

(73) Patentinhaber: **INSTITUT FÜR MIKROELEKTRONIK STUTTGART**
**70569 Stuttgart (DE)**

(72) Erfinder:
 • **APEL, Uwe**
  **D-72666 Neckartailfingen (DE)**
 • **SEGER, Ulrich**
  **D-71106 Magstadt (DE)**
 • **GRAF, Heinz-Gerd**
  **D-71106 Magstadt (DE)**
 • **POSTEL, Udo**
  **D-01157 Dresden (DE)**
 • **SCHÖNHERR, Hans-Jörg**
  **D-01159 Dresden (DE)**
 • **ARMBRUSTER, Armin**
  **D-78187 Geisingen (DE)**

(74) Vertreter: **Münich, Wilhelm, Dr.**
**Anwaltskanzlei Dr. Münich & Kollegen,**
**Wilhelm-Mayr-Strasse 11**
**80689 München (DE)**

(56) Entgegenhaltungen:
**EP-A- 0 469 878     EP-A- 0 569 063**
**US-A- 4 839 729**

**Beschreibung**

Technisches Gebiet

Die Erfindung bezieht sich auf ein Verfahren sowie eine Schaltungsanordnung zur Kompensation temperatur-, spannungs- sowie herstellungsbedingter Schwankungen bei CMOS-Bildsensoren, die mit Strahlung beaufschlagt werden und in Abhängigkeit der Bestrahlungsstärke elektrische Ausgangssignale generieren, die einer logarithmischen Kennlinie unterliegen.

Stand der Technik

In den Veröffentlichungen "A 128 x 128- Pixel Standard- CMOS Image Sensor with Electronic Shutter", Chye Huat Aw and Bruce A. Wooley, IEEE JOURNAL OF SOLID- STATE CIRCUITS, VOL 31, NO. 12, DEC. 1996 sowie DE 42 09 536 C2 werden CMOS- Bildsensoren beschrieben, deren Ausgangssignale ein logarithmisches Abbild der auf die lichtempfindlichen Pixel auftreffenden Bestrahlungsleistung liefern. Die Ausgangskennlinien unterliegen jedoch im Betriebsspannungs-, Technologieund Temperaturbereich Schwankungen, so daß eine Serienreproduzierbarkeit der Meßergebnisse nur unter eingeschränkten Randbedingungen gewährleistet ist. Untersuchungen zum Übertragungsverhalten dieser Empfänger und zu einer Kompensationsmöglichkeit der oben beschriebenen Einflußgrößen finden sich z.B. in "Ermittlung und Kompensation des Temperaturverhaltens eines optischen Signalaufnehmers", Jochen Reiter, Diplomarbeit 1997, Institut für Netzwerk- und Systemtheorie, Universität Stuttgart.
Um besser verstehen zu können, welchen Abhängigkeiten ein Ausgangssignal derartiger HDRC-Bildsensoren unterliegt, wird nachfolgend das Übertragungsverhaltens eines HDRC-Bildaufnehmers kurz erlautert werden
Die Ausgangskennlinie eines HDRC- Pixel läßt sich wie folgt beschreiben:

$$(1) \qquad UAL = U0 - VAL \cdot UT \cdot (\log (10/(\text{le+Idark})) + \log KFPN))$$

Hierin bedeuten:

| | |
|---|---|
| UAL | logarithmische Ausgangsspannung einer Pixelzelle |
| UO | Gleichspannungsarbeitspunkt einer Pixelzelle (Betriebsspannungs- und Technologieparameter) |
| VAL | interne Verstärkung einer Pixelzelle; |
| | (Technologieparameter, Faktor für UT, liefert mV/dec Signalhub) |
| UT | Temperaturspannung |
| I0 | Zellinterner Sättigungsstromwert |
| | (Betriebsspannungs- und Technologieparameter) |
| le | Photostrom in der Sensorzelle, der über den Parameter s mit der Bestrahlungsteistung für das Pixel [W/m$^2$] korrespondiert |
| Idark | thermisch generierter Dunkelstrom in der Sensorzelle, temperatur-, technologie- und geometrieabhängig begrenzt für höhere Temperaturen Arbeitsbereich im Dunklen |
| s | Empfindlichkeit eines Pixel [A*m$^2$/W] |
| | (Technologie- und Geometrieparameter) |
| KFPN | pixelbezogener Technologieparameter |
| | (erzeugt "fixed pattern noise", FPN) |

Wie aus dieser Gleichung (1) entnehmbar ist, wird die auf einem Pixel auftreffende Bestrahlungsleistung im logarithmischen Maßstab abgebildet.
Die Beschreibung der Pixelübertragungskennlinie weist jedoch verschiedene Abhängigkeiten auf, die eine Bewertung der Bestrahlungsleistung ohne Kenntnis und Kompensation der technologiegedingten Einflußgrößen erschweren.

Kurze Beschreibung der Erfindung

Die der Erfindung zugrundeliegende Aufgabe besteht darin, das Temperaturverhalten dieser HDRC- Sensoren über einen großen Arbeitsbereich hinsichtlich Temperatur und Helligkeit genau zu erfassen und in Ableitung aus dem typischen Übertragungsverhalten einfache Kompensationsalgorithmen bzw. -maßnahmen zu entwikkeln. Die dazu notwendigen Schaltungen sollen technologisch völlig kompatibel zu dem Schaltungskonzept dieser speziellen CMOS- Bildaufnehmer aufgebaut sein.

Die Lösung der Aufgabe ist im Anspruch 1 angegeben, der ein erfindungsgemäßes Verfahren zur Kompensation temperatur-, spannungs- sowie herstellungsbedingter Schwankungen bei CMOS-Bildsensoren zum Inhalt hat. Anspruch 5 betrifft eine Schaltungsanordnung zur Durchführung des Verfahrens. Den Erfindungsgedanken weiterbildende Merkmale sind Gegenstand der Unteransprüche.

Das erfindungsgemäße Verfahren zur Kompensation temperatur-, spannungs- sowie herstellungsbedingter Schwankungen bei CMOS-Bildsensoren, die mit Strahlung beaufschlagt werden und in Abhängigkeit der Bestrahlungsstärke elektrische Ausgangssignale generieren, die einer logarithmischen Kennlinie unterliegen zeichnet sich durch die Kombination der folgenden Verfahrensschritte aus:

Mittels wenigstens zweier Referenz-CMOS-Sensoren, die auf gleichem Temperaturniveau gehalten werden, wie die zu kompensierenden CMOS-Bildsensoren, jedoch nicht bestrahlt werden, werden zwei Refenzsignale generiert, von denen einer einem Referenz-Dunkelwert und der andere, durch Beaufschlagen mittels elektrischem Strom, einem Referenz-Hellwert entspricht. Die generierten Renferenzsignale werden getrennt voneinander derart verstärkt, daß die Verstärkungsbedingungen identisch mit der Verstärkung der zu kompensierenden Ausgangssignale sind Die Referenzsignale, mit einem zu den elektrischen Ausgangssignalen der zu kompensierenden CMOS-Bildsensoren identischen Temperaturgang, werden einem A/D-Umsetzer zugeführt. In einer Speichereinheit ist für jeden einzelnen zu kompensierenden CMOS-Bildsensorpunkt wenigstens ein Korrekturwert abgespeichert, der zur Kompensation herstellungsbedingter Schwankungen geeignet ist und zur Korrektur auf das jeweilige zu kompensierende Ausgangssignal beaufschlagt wird, so daß FPN (=fixed pattern noise)-korrigierte Ausgangssignale gewonnen werden. Die FPN-korrigierten Ausgangssignale sowie die erhaltenen Referenzsignalen werden dem A/D-Wandler zugeführt, in dem die Ausgangssignale des CMOS-Bildsensors kompensiert und in digitale Signale umgesetzt werden.

Die erfindungsgemäße Schaltungsanordnung gemäß Anspruch 5 dient der Durchführung des Verfahrens.

Zur Abdeckung des Bereiches auf einem Bildsensor-Chip, auf dem die Referenzsensoren untergebracht sind, wird eine Metallisierungs-Schicht verwendet. Die optisch dichten Referenzpixelzellen, die einen zu den lichtempfindlichen Pixelzellen vergleichbaren, vorzugsweise identischen Aufbau besitzen, und die eine definierte externe Einspeisung von Strömen zulassen, bilden eine exakte "Photostromgenerierung" entsprechend einem definierten Bestrahlungspegel nach.

Diese Referenzpixelzellen können sowohl als einzelne Elemente oder als Verbund ausgelegt sein, um über Mittelung mehrerer, gleich angeregter Pixel einen repräsentativen Referenzwert zu erreichen.

Die Übertragungsgleichung des Referenzpixels, das den Hellwert liefert kann wie folgt beschrieben werden:

$$(2) \qquad UAR = U0 - VAR \cdot UT \cdot (\log (I0/(Iset + Idark) + \log KFPN)$$

UAR     logarithmische Ausgangsspannung einer Referenz-Pixelzelle

VAR     interne Verstärkung einer Referenzpixelzelle

Iset     von außen in die Referenzpixelzelle eingeprägter "Photostrom"

Die Referenzpixelzelle für den Dunkelwert benötigt hingegen keinen externen Stromzugang, vielmehr wird die Referenzspannung durch den temperaturabhängigen Dunkelstrom bestimmt.

Prinzipiell kann der durch das Fix-Pattern-Noise (FPN) für jede Zelle zu korrigierende Offset gegen den direkten Ausgangswert der Dunkelreferenz ermittelt werden.

Eine Anpassung des Dunkelreferenzwertes mit einer Offset-Korrekturschaltung analog zu der für alle Bildzellen durchgeführten Korrektur bietet den Vorteil, durch eine Anpassung der Dunketwertspannung UTK(dark) an die Verteilung der FPN-Offsets mit einer minimalen Bitbreite für den digitalen Korrekturwert arbeiten und damit Speicherplatz sparen zu können. Ist neben der Dunkelwert-Referenz auf dem Chip mindestens ein weiteres Elemente integriert, das mit einem eingeprägten Strom Iset einen sinnvoll nutzbaren Hellwert darstellt, kann über die Differenz zweier Referenzausgangsgrößen der Referenzspannungsbereich (full-scale) eines zur Wandlung eingesetzten AD- Umsetzers abgeleitet werden:

$$(3) \qquad \Delta UAR = VAR * UT * (\log( IH/ID ) + \log(KFPNH/KFPND))$$

IH     Photostrom in der Sensorzelle, die den Hellwert liefert

ID     Photostrom in der Sensorzelle , die den Dunkelwert liefert

KFPNH     pixelbezogener Technologieparameter für Sensorzelle die den Hellwert liefert

KFPND     pixelbezogener Technologieparameter für Sensorzelle die den Dunkelwert liefert

Gleichung (3) läßt erkennen, daß durch die Differenzbildung die Parameter U0 und I0 nicht mehr für eine Auswertung relevant sind. Die Differenz der Ausgangsspannungen zweier Referenzquellen erzeugt das lineare Abbild der Chiptemperatur und somit eine lineare Temperaturabhängigkeit der Referenzspannung am AD- Umsetzer.

Technologisch bedingte Arbeitspunkte und deren Schwankungen werden durch die Differenzbildung eliminiert.

Kurze Beschreibung der Zeichnungen

Die Erfindung wird anhand eines Ausführungsbeispiels unter Bezugnahme auf die nachstehenden Figuren näher beschrieben. Es zeigen:

Fig. 1    Prinzipschaltbild einer Schaltungsanordnung,
Fig. 2    Prinzipschaltbild einer erweiterten Videoverstärkerschaltung sowie
Fig. 3    Prinzipschaltbild einer Korrekturschaltung mit digitalem Eingang.

Darstellung von Ausführungsbeispielen

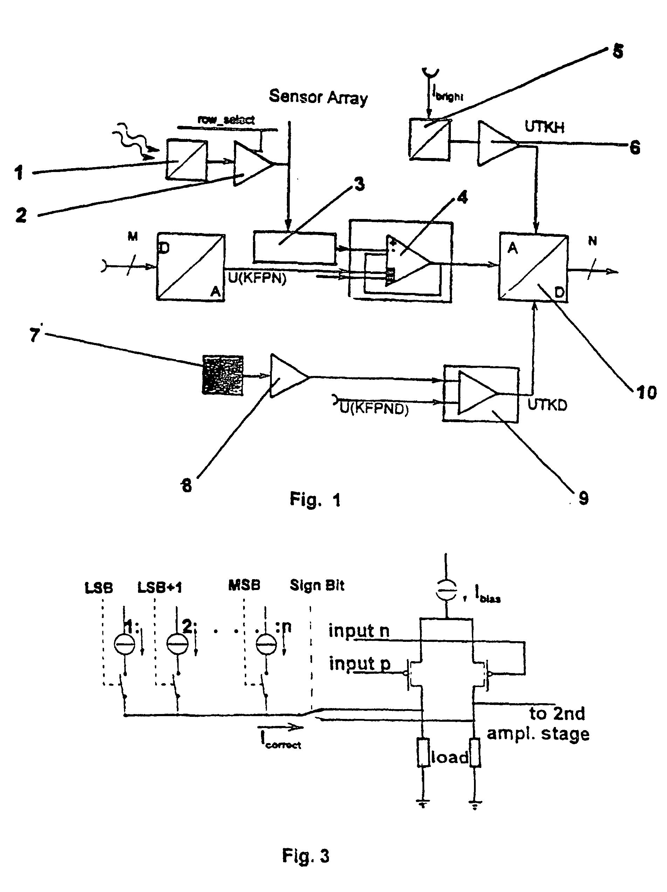

Die in Fig. 1 dargestellte Schaltungsanordnung weist einen zu kompensierenden Bildsensor 1 auf, der temperatur- spannungs- sowie herstellungsbestimmten Schwankungen unterworfen ist. Das Ausgangssignal des zu kompensierenden Bildsensors 1 wird nachfolgend mit einer Verstärkereinheit 2 verstärkt und über einen Spaltendecoder 3 einem Videoverstärker 4 zugeführt. Zur Generierung der gewünschten Referenzwerte ist zum einen ein Referenzsensor 5 vorgesehen, der über eine externe Stromversorgung verfügt, so daß das Ausgangssignal des Referenzsensors 5 einem definierten Bestrahlungspegel entspricht. Der auf diese Weise erzeugte Hellwert wird mittels eines Verstärkers 6 mit der Hellwertspannung UTKH an einen A/D-Wandler 10 angelegt.

Zur Erzeugung eines entsprechenden Dunkelreferenzwertes dient ein Referenzsensor 7, der identisch zum Referenzsensor 5 auf gleichem Temperaturniveau liegt, jedoch nicht extern mit einem entsprechenden Steuerstrom zur Erzeugung eines definierten Bestrahlungspegels beaufschlagt wird. Der von dem Referenzsensor 7 abgegebene Referenzdunkelwert wird ebenfalls über einen Verstärker 8 verstärkt und zusammen mit einer Korrekturspannung U (KFPND), die einem pixelbezogenen Technologieparameter entspricht, einer Korrekturschaltung 9 zugeführt, an deren Ausgang eine korrigierte Dunkelwertspannung UTKD anliegt, die an einem Eingang am A/D-Wandler 10 zugeführt wird.

Aus einer nicht in der Fig. 1 dargestellten Speichereinheit werden zur Kompensation von herstellungsbedingten Schwankungen der einzelnen Bildsensoren Korrekturwerte mit einer Bitbreite von M an eine D/A-Umsetzereinheit angelegt, die diesen Wert in die entsprechende Korrekturspannung U(KFPN) umsetzt. Die Korrekturspannung wird einer zusätzlichen Differenzeingangsstufe des Videoverstärkers 4 zugeführt. Damit wird das Ausgangssignal des Bildsensorarrays (das Videosignal) um die für jeden Bildpunkt individuell gegebene Offset-Spannung kompensiert, die durch Schwankungen einzelner Technologieparameter verursacht wird.

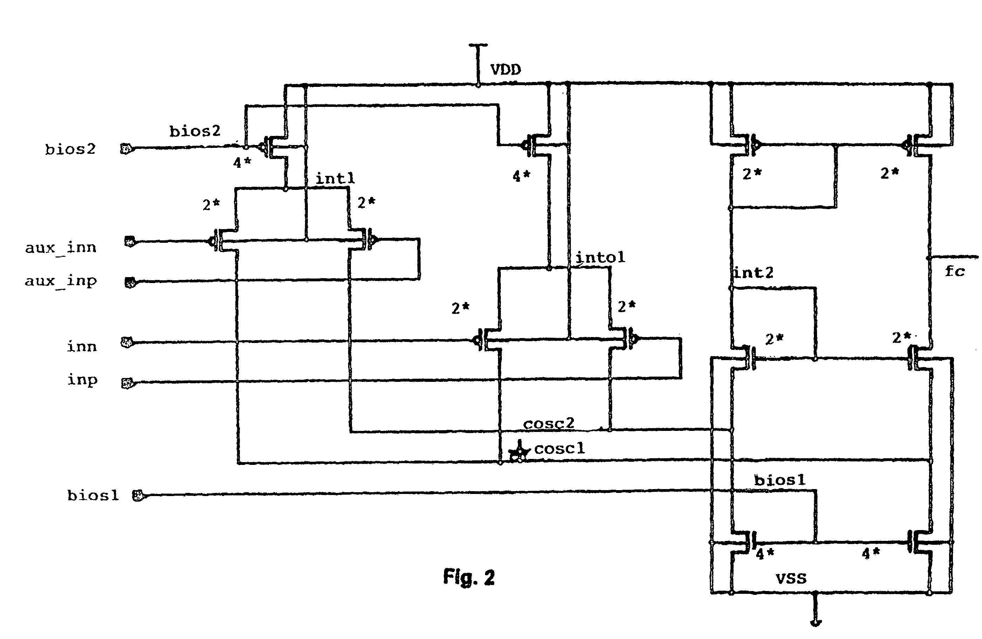

Eine beispielhafte Lösung für die in Figur 1 gezeigte Funktionsgruppe eines Video-Verstärkers mit analogem Offset-Korrektureingang ist in Fig. 2 dargestellt. Die beiden rechten Zweige stellen eine reguläre Folded-Cascode-Schaltung dar, die in der CMOS-Verstärkertechnik bekannt ist (siehe z.B. K.R. Laker and W.M.C. Sansen, Design of Analog Integrated Circuits and Systems", McGraw-Hill, 1994, Seite 588). Der linke Zweig, der als zusätzliche Differenzstufe mit einer Verstärkung kleiner als 1 ausgelegt ist, bewirkt bei Anlegen der Korrekturspannungswerte die gezielte Beaufschlagung des Videosignals mit einem Offset. Der invertierende Eingang dieser zusätzlichen Differenzstufe wird auf einen Referenzpegel, typischerweise VDD/2, gelegt, an den nicht-invertierenden Eingang wird das aus dem A/D-Umsetzer gebildete FPN-Korrektursignal angelegt, das einen symmetrisch um VDD/2 liegenden Spannungsbereich von einigen 100 mV umfaßt . Der genaue Hub dieses Signals leitet sich aus der Streuung der zu korrigierenden Offset-Fehler (FPN) der einzelnen Bildpixel und aus der Verstärkung der zusätzlichen Differenzeingangsstufe ab.

Bias1 und Bias2 sind hierbei extern generierte Biasspannungen für die Einstellung der Stromquellen in der differenziellen Haupt-Eingangsstufe sowie für die zusätzliche Eingangsstufe, die mit den Signalen aux_inn bzw. Aux_inp beaufschlagt werden, fc ist der Ausgangsknoten, der auf eine nachfolgende Treiberstufe geführt ist. Die anderen Namen in diesem Bild stellen interne Knotenbezeichnungen dar.

Die Figur 3 zeigt eine schaltungstechnische Lösung für die im Videoverstärker durchzuführende FPN-Korrektur mit minimalem Bauelementeaufwand. Die in der Fig. 2 gezeigte zusätzliche Differenzeingangsstufe, die eine zusätzliche Einspeisung von Strömen in die Knoten casc1 und casc2 der Folded-Cascode-Verstärkerschaltung bewirkt, wird hier durch eine Reihe binär gewichteter Stromquellen ersetzt. Die Stromquelle mit dem kleinsten definierten Strom wird durch das niederwertigste Bit (Least Significant Bit) angesteuert.

Je nach Wert des Vorzeichenbits des Korrekturwertes wird der zusätzliche Strom in casc1 oder casc2 eingespeist und bewirkt einen positiven oder negativen Offset auf dem Videosignal. Der Betrag der Offsetspannung hängt linear mit der Stromstärke zusammen, die durch Öffnen und Schließen der Schalter unter den jeweiligen Stromquellen eingestellt werden. Die einzelnen Schalterpositionen werden direkt durch die abgespeicherten Korrekturwerte bestimmt. Damit entfällt der Zwischenschritt der Generierung einer Korrekturspannung über einen A/D-Umsetzer, die wiederum über die zusätzliche Differenzeingangsstufe in Ströme umgesetzt werden muß. Die in der Figur 3 dargestelltem Differenzeingangsstufe entspricht der Haupt-Differenzeingangsstufe der Folded-Cascode-Schaltung in Figur 2 (mittlerer Zweig).

Besonders bemerkenswert ist die Ausbildung des internen Video-Verstärkers 4 mit der zusätzlichen Differenzeingangsstufe 4', respektive als Satz geschalteter Stromquellen in binärer Staffelung, so daß die Offset-Korrektur on-Chip im analogen Signalpfad vorgenommen werden kann. Die Verstärkung dieses zusätzlichen Zweiges ist deutlich kleiner 1 ausgelegt, die Eigenschaften des ursprünglichen Verstärkungszweiges über die große Differenzeingangsstufe werden durch die zusätzliche Baugruppe nicht beeinträchtigt. Das originale Videosignal wird in dieser Schaltung mit einem definierten, für jedes Pixel separat einstellbaren Offset beaufschlagt. Der Nutzen liegt darin, daß der Wandelbereich des nachfolgenden A/D-Umsetzers auf den tatsächlichen Videosignalhub eingeschränkt werden kann, während bei einer Korrektur über die digitalen Bilddaten eine größere Bitzahl zur Abdeckung des Korrekturbereichs vorgesehen werden muß.

Bei einer Auslegung der Video-Verstärkerschaltung entsprechend Fig. 2 müssen die analogen Korrekturwerte extern mittels eines D/A-Umsetzers aus den im ROM abgelegten FPN-Korrekturdaten für das jeweils aktuell adressierte Pixel erzeugt werden.

Beide Gate-Anschlüsse der zusätzlichen Differenzeingangsstufe sind dabei auf externe Anschlüsse geführt, der Referenzeingang wird intern auf die halbe Versorgungsspannung vorbelegt. Der Referenzspannungswert kann über ein direkt angeschlossenes Pad von außen überprüft und gegebenenfalls durch eine externe Spannungsquelle definiert werden.

Die Korrekturwerte können z.B. durch einen Abgleich der Ausgangswerte bei einheitlicher Beleuchtung (oder vollständiger Abdunklung) des Sensorchips ermittelt werden. Dabei sollte zuerst mittels eines Histogramms der Schwerpunkt der Graustufen bestimmt werden, um den möglichen Abgleichbereich von ca. ±60 mV vollständig ausnutzen zu können. Der Abgleich kann iterativ für jedes Pixel vorgenommen werden, indem das Korrektursignal solange nachgeführt wird, bis der Ausgang den Zielwert erreicht. Der Korrekturwert sollte in einem Bereich von 2.5 V ±0.5 liegen. Das Korrektursignal sollte beim Abgleich mit dem D/A-Umsetzer generiert werden, der später im Betrieb eingesetzt wird.

## Patentansprüche

1. Verfahren zur Kompensation temperatur-, spannungs- sowie herstellungsbedingter Schwankungen bei CMOS-Bildsensoren, die mit Strahlung beaufschlagt werden und in Abhängigkeit der Bestrahlungsstärke elektrische Ausgangssignale generieren, die einer logarithmischen Kennlinie unterliegen,

   **dadurch gekennzeichnet,**

   - **daß** mittels wenigstens zweier Referenz-CMOS-Sensoren, die auf gleichem Temperaturniveau gehalten werden, wie die zu kompensierenden CMOS-Bildsensoren, jedoch nicht bestrahlt werden, zwei Refenzsignale generiert werden, von denen einer einem Referenz-Dunkelwert und der andere, durch Beaufschlagen mittels elektrischem Strom, einem Referenz-Hellwert entspricht,
   - **daß** die generierten Renferenzsignale getrennt voneinander derart verstärkt werden, daß die Verstärkungsbedingungen identisch mit der Verstärkung der zu kompensierenden Ausgangssignale sind,
   - **daß** die Referenzsignale mit einem zu den elektrischen Ausgangssignalen der zu kompensierenden CMOS-Bildsensoren identischen Temperaturgang einem A/D-Wandler zugeführt werden,
   - **daß** in einer Speichereinheit für jeden einzelnen zu kompensierenden CMOS-Bildsensorpunkt wenigstens ein Korrekturwert abgespeichert ist, der zur Kompensation herstellungsbedingter Schwankungen geeignet ist und zur Korrektur auf das jeweilige zu kompensierende Ausgangssignal beaufschlagt wird, so daß FPN (=fixed pattern noise)-korrigierte Ausgangssignale gewonnen werden, und
   - **daß** die FPN-korrigierten Ausgangssignale sowie die erhaltenen Referenzsignalen dem A/D-Wandler zugeführt werden, in dem die Ausgangssignale des CMOS-Bildsensors kompensiert und in digitale Signale umgesetzt werden.

2. Verfahren nach Anspruch 1,
   **dadurch gekennzeichnet, daß** zur Generierung des Referenz-Hellwertes ein Referenz-CMOS-Sensor mit externem elektrischen Strom beaufschlagt wird, der eine exakte Photostromgenerierung entsprechend einer definierten Bestrahlungsstärke nachbildet.

3. Verfahren nach Anspruch 1 oder 2,

**dadurch gekennzeichnet, daß** zum Erhalt des Referenz-Dunkel- und Hellwertes eine Vielzahl von Referenz-CMOS-Sensoren verwendet wird, über deren Referenzsignale gemittelt wird.

4. Verfahren nach einem der Ansprüche 1 bis 4,
**dadurch gekennzeichnet, daß** durch Anlegen der Referenzsignale an den A/D-Wandler mittels dynamischer Nachführung der vollständige, nutzbare Umsetzungsbereich des A/D-Wandlers genutzt wird

5. Schaltungsanordnung zur Kompensation temperatur-, spannungs- sowie herstellungsbedingter Schwankungen bei CMOS-Bildsensoren (1), die mit Strahlung beaufschlagt werden und in Abhängigkeit der Bestrahlungsstärke elektrische Ausgangssignale generieren, die einer logarithmischen Kennlinie unterliegen,
**dadurch gekennzeichnet, daß** zusätzlich zu dem zu kompensierenden CMOS-Bildsensor wenigstens zwei, von der Bestrahlung abgedeckte Referenz-CMOS-Sensoren (5,7) vorgesehen sind, die auf gleichem Temperaturniveau liegen, wie die zu kompensierenden CMOS-Bildsensoren und zwei Refenzsignale generieren, von denen einer einem Referenz-Dunkelwert (UTKD) und der andere, durch Beaufschlagen eines auf einen Referenz-CMOS-Sensor einwirkenden elektrischen Stromes, einem Referenz-Hellwert (UTKH) entspricht,
daß jedem Referenz-CMOS-Sensor eine Verstärkereinheit (6,8) nachgeschaltet ist, die jeweils identisch mit einer für die zu kompensierenden Ausgangssignale vorgesehenen Verstärkereinheit (2) ist,
daß eine Speichereinheit vorgesehen ist, in der für jeden einzelnen zu kompensierenden CMOS-Bildsensorpunkt wenigstens ein Korrekturwert abgespeichert ist, der zur Kompensation herstellungsbedingter Schwankungen geeignet ist und zur Korrektur auf das jeweilige zu kompensierende Ausgangssignal beaufschlagt wird, so daß sogenannte FPN (=fixed pattern noise)-korrigierte Ausgangssignale gewonnen werden, und
daß ein A/D-Wandle (10) vorgesehen ist, der die kompensierten Ausgangssignale in digitale Signale umsetzt.

6. Schaltungsanordnung nach Anspruch 5,
**dadurch gekennzeichnet, daß** eine Korrektureinheit (4) vorgesehen ist, in der die Korrekturwerte aus der Speichereinheit und die Ausgangssignale aus dem CMOS-Bildsensor zusammengeführt werden und die Ausgangssignale FPN-korrigiert werden.

7. Schaltungsanordnung nach Anspruch 6,
**dadurch gekennzeichnet, daß** die Korrektureinheit eine Video-Verstärkerstufe mit einer zusätzlichen Differenzeingangsstufe ist.

8. Schaltungsanordnung nach Anspruch 7,
**dadurch gekennzeichnet, daß** die Verstärkung der zusätzlichen Differenzeingangsstufe kleiner 1 ist.

9. Schaltungsanordnung nach Anspruch einem der Ansprüche 5 bis 8,
**dadurch gekennzeichnet, daß** eine weitere unabhängige Korrekturschaltung zur Offset-Korrektur der Dunkel-Referenzwerte vorgesehen ist.

**Claims**

1. Method of compensating variations induced by temperature, voltage and manufacture in CMOS image sensors exposed to radiation and generating electric output signals as a function of the irradiation intensity, which present a logarithmic characteristic
**characterised in**

   · that two reference signals are generated by means of at least two reference CMOS sensors held at the same temperature level as the CMOS image sensors but not exposed to radiation, with one of them corresponding to a reference dark value while the other corresponds to a reference bright value in response to exposure to an electric current,
   · that said generated reference signals are amplified separately from each other in such a way that the conditions of amplification are identical with the amplification of the output signals to be compensated,
   · that said reference signals are supplied to an A/D converter at a temperature development identical with the electric output signals of the CMOS image sensors to be compensated,
   · that a memory unit stores at least one correction value for each CMOS image sensor point to be compensated, which correction value is applied to the respective output signal to be compensated, so that output signals corrected for FPN (fixed-pattern noise) will be obtained, and

· that the FPN-corrected output signals as well as the obtained reference signals are supplied to the A/D converter by compensation of the output signals of the CMOS image sensor and their conversion into digital signals.

**2.** Method according to Claim 1,
**characterised in that** for generation of the reference bright value an external electric current is applied to a reference CMOS sensor, which reproduces a precise photo current generation in correspondence with a defined radiation intensity.

**3.** Method according to Claim 1 or 2,
**characterised in that** a plurality of reference CMOS sensors is used to obtain a reference dark value and bright value, with the mean being taken over the reference signals of these sensors.

**4.** Method according to any of the Claims 1 to 3,
**characterised in that** the complete useful conversion range of said A/D converter is utilised by applying said reference signals to said A/D converter by dynamic following.

**5.** Circuit configuration for compensating variations induced by temperature, voltage and manufacture in CMOS image sensors exposed to radiation and generating electric output signals as a function of the irradiation intensity, which present a logarithmic characteristic
**characterised in that** at least two reference CMOS sensors (5, 7) are provided in addition to the CMOS image sensor to be compensated, which sensors are covered by the radiation, are held at the same temperature level as the CMOS image sensors to be compensated and generate two reference signals whereof one corresponds to a reference dark value (UTKD) whilst the other corresponds to a reference bright value (UTKH) in response to influencing an electric current acting upon one reference CMOS sensor,
that a respective amplifier unit (6, 8) is connected downstream of each reference CMOS sensor, which is identical with an amplifier unit (2) for the output signals to be compensated,
that a memory unit is provided for storing at least one correction value for each CMOS image sensor pixel to be compensated, which value is appropriate for compensating variations induced by the manufacturing process and for correction to the respective output signal to be compensated so that so-called FPN-corrected (FPN = fixed-pattern noise) output signals are obtained, and
that an A/D converter (10) is provided that converts the compensated output signals into digital signals.

**6.** Circuit configuration according to Claim 5,
**characterised in that** a correction unit (4) is provided in which the correction values from said memory unit and the output signals from said CMOS image sensor are combined and the output signals are subjected to FPN correction.

**7.** Circuit configuration according to Claim 6,
**characterised in that** said correction unit is a video amplifier stage with an additional differential input stage.

**8.** Circuit configuration according to Claim 7,
**characterised in that** the gain of said additional differential input stage is smaller than 1.

**9.** Circuit configuration according to any of the Claims 5 to 8,
**characterised in that** a further independent correction circuit is provided for offset correction of the dark reference values.

**Revendications**

**1.** Procédé de compensation de fluctuations induites par la température, la tension et la fabrication dans des capteurs d'images CMOS exposés au rayonnement et de génération de signaux électriques de sortie en fonction de l'intensité du rayonnement, qui présentent une caractéristique logarithmique
caractérisé en ce

· que deux signaux de référence sont engendrés moyennant au moins deux capteurs CMOS de référence tenus au même niveau de température que les capteurs d'images CMOS, mais non exposés au rayonnement, dont l'un correspond à une valeur d'obscurité de référence, pendant que l'autre correspond à une valeur d'illumination de référence en réponse à l'exposition à un courant électrique,

- en ce que lesdits signaux de référence engendrés sont amplifiés l'un séparément de l'autre, d'une façon, que les conditions d'amplification sont identiques avec l'amplification des signaux de sortie à compenser,
- en ce que lesdits signaux de référence sont alimentés à un convertisseur analogique/numérique à une progression de température identique avec les signaux électriques de sortie des capteurs d'images CMOS à compenser,
- en ce qu'une unité de mémoire mémorise au moins une valeur de correction pour chaque point de capteur d'images CMOS à compenser, cette valeur de correction étant appliquée au signal de sortie respectif à compenser, de façon, que les signaux de sortie corrigés en FPN (bruit à structure fixe) soient obtenus, et
- en ce que les signaux de sortie corrigés en FPN ainsi que les signaux de référence obtenus sont alimentés au convertisseur analogique/numérique par compensation des signaux de sortie du capteur d'images CMOS et leur conversion en signaux numériques.

2. Procédé selon la revendication 1,
   **caractérisé en ce que** pour la génération de la valeur d'illumination de référence un courant électrique extérieur est appliqué à un capteur de référence CMOS, qui reproduit une génération précise du photo courant en correspondance avec une intensité du rayonnement définie.

3. Procédé selon la revendication 1 ou 2,
   **caractérisé en ce qu'**une pluralité de capteurs CMOS de référence est utilisée afin d'obtenir valeur d'obscurité de référence et une valeur d'illumination, en prenant la moyenne des signaux de référence de ces capteurs.

4. Procédé selon une quelconque des revendications 1 à 3,
   **caractérisé en ce que** la gamme de conversion utilisable complète dudit convertisseur analogique/numérique est utilisée par application desdites signaux de référence audit convertisseur analogique/numérique, à suite dynamique.

5. Configuration de circuit de compensation des fluctuations induites par la température, la tension et la fabrication dans des capteurs d'images CMOS exposés au rayonnement, et de génération des signaux électriques de sortie en fonction de l'intensité du rayonnement, qui présentent une caractéristique logarithmique
   **caractérisé en ce qu'**au moins deux capteurs CMOS de référence (5, 7) sont disposés, au plus du capteur d'images CMOS à compenser, ces capteurs étant balayés par le rayonnement, qui sont tenus au même niveau de température que les capteurs d'images CMOS à compenser et engendrent deux signaux de référence, dont l'un correspond à la valeur d'obscurité de référence (UTKD), pendant que l'autre correspond à une valeur d'illumination de référence (UTKH) en réponse à la prise de l'influence sur un courant électrique, qui agit sur un capteur CMOS de référence,
   **en ce qu'**une unité amplificatrice (6, 8) respective est reliée en aval de chaque capteur CMOS de référence, qui est identique avec une unité amplificatrice (2) pour les signaux de sortie à compenser,
   **en ce qu'**une unité de mémoire est prévue à mémoriser au moins une valeur de correction pour chaque pixel de capteur d'images CMOS à compenser, cette valeur étant appropriée à compenser des fluctuations induites par le processus de fabrication et à corriger le signal de sortie respectif à compenser, de façon, que des signaux de sortie dits corrigés en FPN (FPN = bruit à structure fixe) soient obtenus, et
   **en ce qu'**un convertisseur analogique/numérique (10) est disposé, qui convertit les signaux de sortie compensés en signaux numériques.

6. Configuration de circuit selon la revendication 5,
   **caractérisé en ce qu'**une unité de correction (4) est disposée, dans laquelle les valeurs de correction de ladite unité de mémoire et les signaux de sortie dudit capteur d'images CMOS sont combinés et les signaux de sortie sont assujettis à une correction en FPN.

7. Configuration de circuit selon la revendication 6,
   **caractérisé en ce que** ladite unité de correction est un étage d'amplification vidéo à un étage différentiel d'entrée additionnelle.

8. Configuration de circuit selon la revendication 7,
   **caractérisé en ce que** le facteur de gain dudit étage différentiel d'entrée supplémentaire est plus petit que 1.

**9.** Configuration de circuit selon une quelconque des revendications 5 à 8,
**caractérisé en ce qu'**un circuit de correction indépendant ultérieur est disposé pour une correction de décalage des valeurs d'obscurité de référence.

Sensor Array

row_select

$I_{bright}$

5

UTKH

6

1

2

3

4

M

D

U(KFPN)

A

UTKH

A

N

D

10

7

U(KFPND)

UTKD

8

9

Fig. 1

LSB    LSB+1    MSB    Sign Bit

1:    2:    :n

input n

$I_{bias}$

input p

$I_{correct}$

to 2nd
ampl. stage

load

Fig. 3

10

**Fig. 2**

EP 1 005 754 B1